# EUROPÄISCHE PATENTSCHRIFT

(11) **EP 1 497 164 B1**
(45) Veröffentlichungstag und Bekanntmachung des Hinweises auf die Patenterteilung: **06.08.2008**
(21) Anmeldenummer: 02807252.8
(22) Anmeldetag: 22.04.2002
(51) Int. Cl.: B61F 5/24, B60G 17/015, F16F 15/02

(54) **VERFAHREN ZUR VERMINDERUNG DER SCHALLÜBERTRAGUNG IN FAHRZEUGEN, FAHRWERK FÜR FAHRZEUGE UND AKTUATOR**
METHOD FOR REDUCING SOUND TRANSMISSION IN VEHICLES, AN UNDERCARRIAGE FOR VEHICLES AND AN ACTUATOR
PROCEDE DE REDUCTION DE LA TRANSMISSION DU SON DANS LES VEHICULES, CHASSIS DE VEHICULE ET ACTIONNEUR

(43) Veröffentlichungstag der Anmeldung: 19.01.2005
(73) Patentinhaber: Bombardier Transportation GmbH, 13627 Berlin (DE)
(72) Erfinder: MAIER, Rudolf, 83714 Miesbach (DE); STORM, Stefan, 85716 Unterschleissheim (DE); PUCHER, Mario, 94336 Windberg (DE); RÖDER, Arno, 82008 Unterhaching (DE); MOESER, Clemens, 80992 München (DE); BIEKER, Guido, 57399 Kirchhundern (DE); FRANK, Paul-Gerhard, 57076 Siegen (DE)
(74) Vertreter: Karlhuber, Mathias
(86) Internationale Anmeldenummer: PCT/EP2002/004420
(87) Internationale Veröffentlichungsnummer: WO 2003/089284

(56) Entgegenhaltungen:
- EP-A- 0 412 853
- DE-A- 19 612 677
- DE-C- 19 824 125

## Beschreibung

Die Erfindung betrifft ein Verfahren zur Verminderung der Schallübertragung in Fahrzeugen, und ein Fahrwerk für Fahrzeuge. Die Erfindung ist geeignet für - aber nicht beschränkt auf - den Einsatz in Schienenfahrzeugen, insbesondere für den Personenverkehr, vorzugsweise für den schnellen Fernverkehr.

Bei Fahrzeugen werden Vibrationen bzw. Schwingungen beispielsweise von der Fahrbahn oder der Schiene auf die Fahrzeugzelle übertragen. Derartige Vibrationen können den Fahrkomfort erheblich beeinträchtigen, beispielsweise durch spürbare Vibrationen im Innenraum des Fahrzeugs oder durch Geräusche, die durch Vibrationen verursacht werden. Insbesondere bei Hochgeschwindigkeitszügen stellt das Brummen im Wageninneren ein großes Problem dar. Eine Ursache für derartige Schwingungen bzw. Geräusche ist beispielsweise bei Schienenfahrzeugen ein betriebsbedingter Radverschleiß, der ein Unrundwerden der Räder zur Folge hat.

Bisher wurden verschiedene Versuche unternommen, derartige Schwingungen bei Fahrzeugen und insbesondere bei Schienenfahrzeugen zu reduzieren. In der DE 43 40 351 A1 ist z. B. eine viskose, unelastische Masse in Gestalt einer Schicht mit der Fahrzeugzelle verbunden, um bei auftretenden Strukturschwingungen Relativbewegungen innerhalb der Masse zu ermöglichen und dadurch die Strukturschwingungen zu dämpfen.

Die DD 281 860 A5 zeigt eine Einrichtung zur aktiven Tilgung von Schwingungen bei Schienenfahrzeugen, bei der Schwingungssensoren auftretende Schwingungen erfassen und Steuersignale erzeugen, die aktive Schwingungsdämpfer steuern um gegenphasige Schwingungen zu erzeugen.

In der DE 198 241 25 C1 ist ein Schienenfahrzeug gezeigt, bei dem parallel zu einer Primärfeder des Schienenfahrzeugs Aktuatoren vorgesehen sind, die Ausgleichskräfte erzeugen, um Schwingungsanregungen zu unterdrücken. Schwingungssensoren erfassen die Schwingungen oberhalb der Primärfeder, um Ansteuersignale für die Aktuatoren zu erzeugen.

Eine andere bekannte Möglichkeit zur aktiven Schwingungsisolation ist in der DE 198 42 345 Al offenbart. Dort ist ein Schwingungsabsorber mit einer Masse gezeigt, die über Feder-/ Dämpferelemente im Vergleich zu den Frequenzen des zu bedämpfenden Systems niederfrequent verändert werden können. Um bei einem Schienenfahrzeug die Schwingungen des Wagenaufbaus zu bedämpfen, wird mit Hilfe eines Schwingungssensors der Schwingabsorber durch ein Steuersignal gesteuert. Eine passive Schwingungsabsorbermasse ist über Feder-/Dämpferelemente an den Wagenaufbau angekoppelt. Die Kennung des Schwingungsabsorbers ist abhängig vom Steuersignal veränderbar.

Bei den bekannten Vorrichtungen und Verfahren zur aktiven Schwingungsisolationen, die ähnlich wie passive Schwingungstilger Zusatzkräfte durch Bewegen einer Masse erzeugen, besteht jedoch der Nachteil, dass eine erhebliche Zusatzmasse benötigt wird und darüber hinaus ein großer Bauraum erforderlich ist. Um die Fahrdynamik aktiv beeinflussen zu können, werden die Aktuatoren im Lastpfad, das heißt im Bereich der Fahrwerksfeder, eingesetzt. Daraus ergibt sich, dass die meist hydraulischen Aktuatoren hohe Kräfte aufnehmen müssen und zudem für große Auslenkungen ausgelegt sein müssen. Eine Vibrations- und Geräuschminderung beim Fahren ist bei derartigen bekannten Systemen nur bedingt möglich.

Weiterhin bekannt zur Verringerung von störenden Schwingungen bzw. Vibrationen sind streckengebundene Maßnahmen, die im häufigen Schleifen der Schienen oder Änderung des Oberbaus bestehen. Dies erfordert eine erhöhte Wartung. Änderungen am Oberbau der Strecke sind zudem sehr kostenintensiv.

Auch ein häufiges Abdrehen der Räder zur Verbesserung der Rundlaufeigenschaften und damit zur Verringerung einer der Ursachen der Vibrationen verringert deren Lebensdauer durch den zusätzlichen Materialabtrag.

Es ist weiterhin bekannt, die Strukturdämpfung am Fahrzeugkasten zu erhöhen, indem zusätzliche Einbauten zur weiteren Verringerung der Luftschallabstrahlung dienen. Diese zusätzlichen Einbauten müssen jedoch, um wirksame Verbesserungen zu erzielen, über eine große Fläche verteilt werden und erhöhen unverhältnismäßig das Fahrzeuggewicht.

Aufgabe der Erfindung ist es, die beschriebenen Nachteile des Standes der Technik zu beseitigen und insbesondere ein Verfahren zur Verminderung der Schallübertragung in Fahrzeugen, insbesondere Schienenfahrzeugen und ein Fahrwerk für Fahrzeuge, insbesondere Schienenfahrzeuge vorzuschlagen, bei denen eine Übertragung von Körperschall yermindert werden soll. Weiterhin ist es Aufgabe der Erfindung einen Aktuator vorzuschlagen, der sich durch einen geringen Bauraum und eine effektive Wirkungsweise auszeichnet.

Diese Aufgabe wird durch ein Verfahren zur Verminderung der Schallübertragung in Fahrzeugen, insbesondere Schienenfahrzeugen gemäß den Merkmalen des Anspruchs 1, und Fahrwerke für Fahrzeuge, insbesondere Schienenfahrzeuge gemäß den Merkmalen des Anspruchs 10, gelöst.

Zweckmäßige Ausgestaltungen und Weiterbildungen der Erfindung sind in den Unteransprüchen angegeben.

Beim erfindungsgemäßen Verfahren zur Verminderung der Schallübertragung in Schienenfahrzeugen erfasst mindestens ein Schwingungssensor die störenden, durch die Räder erzeugten und/oder übertragenen Schwingungen. Eine Vorrichtung zur Frequenzanalyse der Signale des mindestens einen Schwingungssensors ermittelt die Frequenzen der stärksten harmonischen Anregungen. Mindestens ein Fehlersensor misst die Restschwingungen bzw. Restkräfte, die auf die Sekundärebene bzw. den Wagenkasten übertragen werden. Eine Regeleinheit generiert bei den durch die Vorrichtung zur Frequenzanalyse des Schwingungssensorsignals ermittelten Störfrequenzen und/oder im Bereich dieser Störfrequenzen die Ansteuersignale für mindestens einen Aktuator, insbesondere Piezoaktuator unter Berücksichtigung der Signale des mindestens einen Fehlersensors. Der mindestens eine Aktuator, insbesondere Piezoaktuator minimiert die Restschwingungen bzw. Restkräfte, die auf die Sekundärebene bzw. den Wagenkasten übertragen werden.

Das erfindungsgemäße Fahrwerk, beispielsweise ein Drehgestell für Schienenfahrzeuge beinhaltet eine Primärebene und eine Sekundärebene.

Weiterhin beinhaltet das Fahrwerk mindestens einen Schwingungssensor, der die störenden durch die Räder erzeugten und/oder übertragenen Schwingungen erfasst, eine Vorrichtung zur Frequenzanalyse der Signale des mindestens einen Schwingungssensors die die Frequenzen der stärksten harmonischen Anregungen ermittelt, mindestens einen Fehlersensor der die Restschwingungen bzw. Restkräfte, die auf die Sekundärebene bzw. den Wagenkasten übertragen werden, misst, eine Regeleinheit die bei den durch die Vorrichtung zur Frequenzanalyse des Schwingungssensorsignals ermittelten Störfrequenzen und/oder im Bereich dieser Störfrequenzen die Ansteuersignale für mindestens einen Aktuator, insbesondere Piezoaktuator unter Berücksichtigung der Signale des mindestens einen Fehlersensors generiert und mindestens einen Aktuator, insbesondere Piezoaktuator der Restschwingungen bzw. Restkräfte, die auf die Sekundärebene bzw. den Wagenkasten übertragen werden, minimiert.

Das Drehgestell überträgt den Körperschall, der aufgrund der Unebenheiten von Rad- und Schienenoberfläche im Radaufstandspunkt entsteht, in den Wagenkasten des Schienenfahrzeugs, der dort in Luftschall umgewandelt wird. Die Ursache des Körperschalls ist zwar durch regelmäßiges, mechanisches Bearbeiten von Rad und Schiene zu bekämpfen, dabei handelt es sich aber um teure Wartungsarbeiten, die nach Möglichkeit zu vermeiden sind. Andererseits führen lärmmindernde Maßnahmen im Bereich des Wagenkastens zu höheren Gewichten, da sie über einen größeren Bereich verteilt werden müssen. Daraus erklärt sich das Interesse, im Bereich des Drehgestells, das noch vergleichsweise nah an der Erregerquelle ist, den Körperschall zu bekämpfen.

Aufgrund der Hauptfunktion eines Drehgestells, die sichere Führung des Fahrzeugs im Gleis zu gewährleisten, können die passiven Bauelemente nur sehr begrenzt an die akustischen Anforderungen angepasst werden. Vielmehr kommt es häufig zu einem Zielkonflikt zwischen den fahrtechnischen Eigenschaften eines Drehgestells und der Reduktion des übertragenen Körperschalls, so dass der Bedarf an zusätzlichen Parametern entsteht, mit denen das Verhalten beeinflusst werden kann, ohne die übrigen Eigenschaften zu verschlechtern. Zu diesem Zweck bieten sich aktive Elemente an, um die Übertragung des Körperschalls durch ein regelbares, frequenzabhängiges Übertragungsverhalten zu beeinflussen.

Die Ebene der Primärfederung und Radsatzführung bietet sich aus zwei Gründen an. Zum einen ist die Anzahl der Koppelstellen geringer als in der Sekundärebene wegen der diversen Dämpfer und etwa einer Wankstütze. Dies sind sämtlich Verbindungen, die aufgrund der vergleichsweise hohen Kontaktsteifigkeit sogenannte Körperschallbrücken darstellen. Zum anderen ist es bei Maßnahmen zur Schallreduktion bewährtes Prinzip, diese möglichst nah an der Erregerstelle anzuordnen.

Weiterhin von Vorteil ist, dass Anordnungen der Aktuatoren möglich sind, die keine sicherheitsrelevanten Eigenschaften des Drehgestells ändern, so dass keine speziellen Maßnahmen für den Ausfall aktiver Komponenten erforderlich sind. Diese Problematik verhindert nicht selten den Einsatz aktiver Elemente.

Im Vergleich zu Aktuatoren, die auf anderen Prinzipien beruhen, ist ein piezoelektrischer Aktuator sehr viel kleiner aufgebaut, was aufgrund des in aller Regel geringen, verfügbaren Bauraums in einem Drehgestell ein wichtiges Kriterium darstellt. Auch bezüglich des Gewichts weist der Aktuator Vorteile auf, was hinsichtlich der lauftechnischen Eigenschaften eines Drehgestells von Bedeutung ist. Das gilt besonders für Aktuatoren im Drehgestell, die sich aufgrund ihres Einbauortes im Primärpfad weit entfernt vom Schwerpunkt des Drehgestells befinden.

Weiterhin von Vorteil ist die Möglichkeit der Detektion tonaler Anteile, deren Frequenzen sich nicht aus einer der Raddrehzahlen ableiten lassen.

Die Erfindung wird anhand des in den Zeichnungen dargestellten Ausführungsbeispiels nachfolgend näher erläutert. Es zeigt schematisch und nicht maßstäblich
- Fig. 1: eine teilweise Schnittansicht eines Fahrwerks eines Schienenfahrzeugs und
- Fig. 2: Blockschaltbild eines Regelkreises.

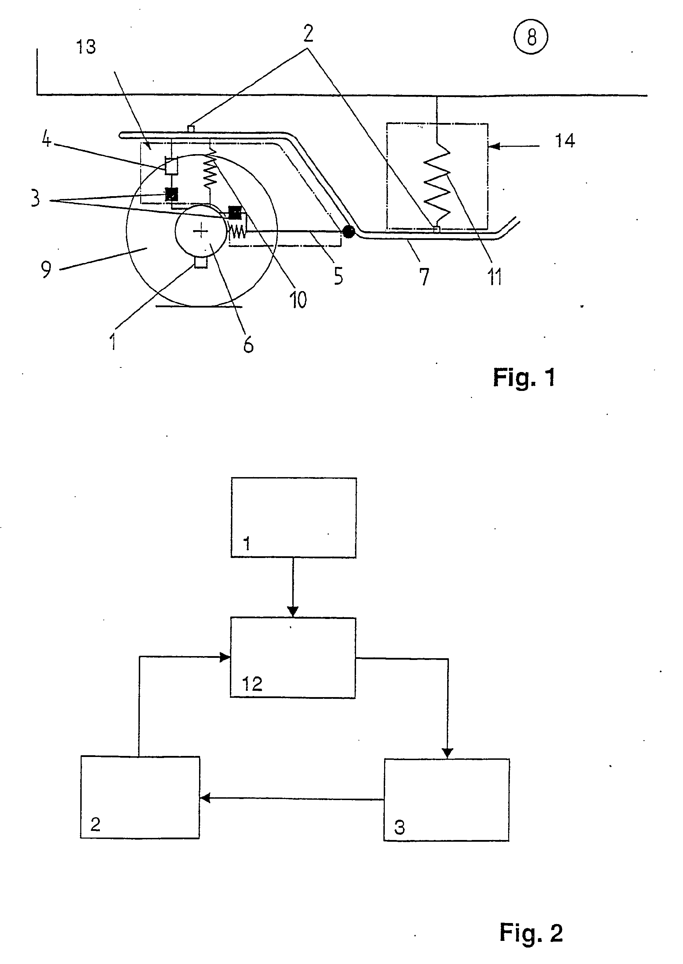

In **Fig.1** ist ein Teil eines Fahrwerks dargestellt, welches ein Drehgestell mit einer Primärebene **13** und einer Sekundärebene **14** offenbart. In Fig. 1 werden ein Schwingungssensor **1,** zwei Fehlersensoren **2** zur Messung von Schwingungen bzw. Kräften, Piezoaktuatoren **3,** ein Primärdämpfer **4,** Radsatzführungselemente **5,** ein Achslager **6,** ein Drehgestellrahmen **7,** Teile des Wagenkastens **8,** ein Radsatz **9** und eine Primärfeder **10** gezeigt.

Die Primärebene **13** umfasst die Radsatzführungselemente **5,** insbesondere einen Radsatzlenker, die Piezoaktuatoren **3,** den Primärdämpfer **4** und die Primärfeder **10.**

Von der Sekundärebene **14** ist in der Fig. lediglich eine Sekundärfeder **11** dargestellt.

Als Schwingungssensoren **1** bzw. Fehlersensoren **2** eignen sich alle Arten von Sensoren, die direkt oder indirekt Schwingungen bzw. Kräfte messen können, beispielsweise Kraftmesssensoren, Wegmesssensoren, Beschleunigungssensoren, Geschwindigkeitssensoren oder ähnliche.

Der Schwingungssensor **1** ist in diesem Ausführungsbeispiel am Achslager **6** angeordnet. Eine Anordnung im Bereich des Achslagers **6,** und/oder im Bereich der Primärfeder **10,** insbesondere unterhalb der Primärfeder **10** und/oder im Bereich zwischen einem anderen Federelement und dem Achslager **6** ist beispielsweise ebenfalls möglich.

Der Schwingungssensor **1** ist mit einer in der Fig. nicht dargestellten Vorrichtung zur Frequenzanalyse der vom Schwingungssensor **1** gelieferten Daten verbunden.

Die Vorrichtung zur Frequenzanalyse ist mit einer in der Fig. nicht dargestellten Regeleinheit und diese wiederum mit den Piezoaktuatoren **3** verbunden.

Die Fehlersensoren **2** sind so angeordnet, dass sie die Restschwingungen bzw. Restkräfte, die auf die Sekundärebene **14** bzw. den Wagenkasten übertragen werden, messen. Mögliche

Anordnungsorte für einen oder mehrere Fehlersensoren **2** bestehen beispielsweise zum einen im Bereich des Achslagers 6 und zum anderen im Bereich der Sekundärfeder **11.** In diesem Ausführungsbeispiel sind die Fehlersensoren **2** am Drehgestellrahmen **7,** zum einen oberhalb des Achslagers **6** und zum anderen oberhalb und/oder unterhalb der Sekundärfeder **11** angeordnet.

Die Piezoaktuatoren **3** sind an einzelnen, mehreren oder allen Körperschallübertragungspfaden der Primärebene **13** angebracht. Körperschallpfade stellen in erster Linie der Primärdämpfer **4,** aber auch die Elemente der Radsatzführung **5,** insbesondere der Radsatzlenker dar. Geeignet sind in der Primärebene **13** alle Elemente, die den Radsatz **9** in x- und/oder y- Richtung, das heißt in Richtung des Gleises und/oder quer dazu, führen, sowie der Primärdämpfer **4.** Die Verwendung der Piezoaktuatoren **3** kann an einem der genannten Positionen oder deren Kombination erfolgen. Die Wirkrichtung der Piezoaktuatoren **3** ist dabei nicht auf die z-Richtung, das heißt senkrecht zur Gleisebene begrenzt. Ebenso ist es möglich, dass der oder die Aktuatoren, insbesondere Piezoaktuatoren **3** mindestens teilweise oder vollständig senkrecht zur Gleisebene und/oder parallel zur Gleisebene, parallel zur Fahrtrichtung und/oder parallel zur Gleisebene, senkrecht zur Fahrtrichtung wirken. Im Ausführungsbeispiel ist einer der Piezoaktuatoren **3** senkrecht zur Gleisebene und ein anderer der Piezoaktuatoren **3** parallel zur Gleisebene, parallel zur Fahrtrichtung angeordnet.

Es ist bekannt, dass Dämpfer im Bereich hoher Frequenzen die Kräfte ungehindert durchleiten und daher Körperschallbrücken darstellen. Ein weiteres wichtiges Argument, an dieser Stelle anzusetzen, ist die Tatsache, dass es sich hier nicht um ein für den Lauf des Fahrzeuges im Gleis sicherheitsrelevantes Bauteil handelt.

Ein Aktuator, der auf dem piezoelektrischen Effekt beruht, ist aufgrund seiner Eigenschaften, große Kräfte zu erzeugen, dazu geeignet, dass er unmittelbar in den Kraftfluss dynamisch steifer Elemente positioniert werden kann, um die Übertragung des Körperschalls direkt zu unterbinden.

Das Grundprinzip dabei ist, den oder die Aktuatoren, insbesondere Piezoaktuatoren **3** so einzubauen, dass sie sich in Serie zu Koppelelementen, beispielsweise dem Primärdämpfer **4** befinden, die im Arbeitsfrequenzbereich des Aktuator eine mechanisch steife Verbindung darstellen und parallel zu Koppelelementen, beispielsweise der Primärfeder **10** die im Arbeitsfrequenzbereich mechanisch möglichst weich sind. Es ist zwar Aufgabe der Regelung, durch Positionierung eines oder mehrerer Sensoren und durch das Regelkonzept den Körperschall an den entscheidenden Punkten der Übertragung zu minimieren, die Wirksamkeit wird aber durch die Positionierung des oder der Aktuatoren, insbesondere Piezoaktuatoren **3** wesentlich beeinflusst, um eine gute "Steuerbarkeit" der Regelstrecke zu erreichen.

Ferner ist es möglich, die Koppelelemente, beispielsweise den Primärdämpfer **4** in Serie mit dem oder den Aktuatoren, insbesondere Piezoaktuatoren **3** so auszuwählen oder auszulegen, dass eine statische Belastung, bzw. eine Belastung bei Frequenzen außerhalb des Arbeitsbereichs ausgeschlossen ist.

Die gezielte Auslegung dieser Koppelemente, z. B. Primärdämpfer **4** hinsichtlich dieser Tatsache verringert die Belastung des Aktuators, insbesondere Piezoaktuators **3** und erhöht seine Wirksamkeit. Der Primärdämpfer **4** gleicht statische und niederfrequente Bewegungen aus. Bei hydraulischen Primärdämpfern **4** kann der Aktuator, insbesondere Piezoaktuator **3** im Dämpferöl gelagert werden, wodurch eine gute Wärmeabfuhr und Erhöhung der Durchschlagsfestigkeit erreicht wird. Ein Teil des oder der Piezoaktuatoren **3** kann ausserdem als Kraftsensor verwendet werden. Dabei misst der Kraftsensor einen Weg an einer definierten Steifigkeit des Aktuators. Dieser Kraftsensor kann beispielsweise als Schwingungssensor **1** und/oder als Fehlersensor **2** Verwendung finden. Somit werden Bauteile eingespart und der Bauraum verringert.

Ferner ist es möglich, die Konstruktion des Fahrgestells, insbesondere des Drehgestells ebenfalls so auszulegen, dass die Koppelpunkte des oder der Aktuatoren, insbesondere Piezoaktuatoren **3** im Arbeitsfrequenzbereich steif sind, und außerhalb dieses Arbeitsbereiches weich.

Zudem kann auch der Körperschall, der durch die übrigen Elemente der Primärfederung übertragen wird, durch einen - auf diese bezogenen - parallel angeordneten Aktuator, insbesondere Piezoaktuator **3** teilweise reduziert werden. Für diesen Effekt ist ebenfalls von Vorteil, dass der oder die Aktuatoren, insbesondere Piezoaktuatoren **3** mit einer großen, dynamischen Steifigkeit in die Struktur bzw. das Federungssystem integriert sind.

Vorzugsweise werden in der gewählten Ebene die Koppelelemente nach ihren mechanischen Eigenschaften ausgewählt, die wesentlich zur Übertragung des Körperschalls beitragen. In der Primärebene **13** sind dies Elemente, die die Fahrzeugkomponenten mit einer vergleichsweise hohen dynamischen Steifigkeit verbinden, insbesondere Achslager **6,** Drehgestellrahmen **7,** und/oder Wagenkasten **8.** Bei dem Einsatz aktiver Elemente ist es von großer Bedeutung, diese so nah wie möglich am Ort der Körperschallentstehung einzusetzen, um deren Anzahl so gering wie möglich zu halten.

In einer weiteren Abwandlung zum Ausführungsbeispiel können der oder die Aktuatoren, insbesondere Piezoaktuatoren **3** und Dämpfer, insbesondere Primärdämpfer **4** zu einer Einheit integriert werden. Der Aktuator kann dabei so in das hydraulische System des Dämpfers eingebaut werden, dass der oben beschriebene Effekt der statischen Kraftentkopplung und dynamischen Ankopplung bewusst ausgenutzt wird, das heißt der Aktuator hat keine strukturmechanische Kopplung, sondern wirkt im gesamten Bauteil nur über die Dämpferflüssigkeiten.

Der Schwingungssensor **1** am Achslager **6** bzw. im Bereich unterhalb der Primärfeder **10,** erfasst die störenden durch die Räder erzeugten und/oder übertragenen Schwingungen. Eine Vorrichtung zur Frequenzanalyse der Signale des Schwingungssensors **1** ermittelt die Frequenzen der stärksten harmonischen Anregungen. Dabei handelt es sich z. B. um Resonanzeffekte aufgrund von Eigenfrequenzen im Drehgestell, Frequenzen der Radharmonischen sowie der Schwellenfachfrequenz und deren Vielfache.

Die Fehlersensoren **2** messen die Restschwingungen bzw. Restkräfte, die auf die Sekundärebene **14** bzw. den Wagenkasten übertragen werden.

Die Regeleinheit generiert unter Berücksichtigung der Signale der Fehlersensoren **2** die bei den durch die Vorrichtung zur Frequenzanalyse des Schwingungssensorsignals ermittelten Störfrequenzen die Ansteuersignale für die Piezoaktuatoren **3** und minimiert so die Restschwingungen bzw. Restkräfte, die auf die Sekundärebene **14** bzw. den Wagenkasten übertragen werden.

Somit wird ein technischer Regelkreise, bestehend aus den Ausgangssignalen des Schwingungssensors 1 als Führungsgröße, den Fehlersensoren **2** als Messfühler, den Piezoaktuatoren **3** als Stellglieder sowie der Vorrichtung zur Frequenzanalyse und der Regeleinheit als Regler **12** gebildet, wie in **Fig. 2** dargestellt. Die Regelstrecke des Regelkreises wird somit aus den Fehlersensoren **2** und den Piezoaktuatoren **3** gebildet.

In diesem Ausführungsbeispiel wird das Signal, welches von der Vorrichtung zur Frequenzanalyse geliefert wird, einer in der Regeleinheit enthaltenen Filteranordnung mit einer Vorstufe und einer Hauptstufe zugeführt und dort nach einem LMS-(least-mean-square)-Fehlerminimierungsverfahren in der Vorstufe mit einem Referenzsignal verknüpft, wobei das Ausgangssignal der Vorstufe als Eingangssignal der Hauptstufe dient. Dabei wird das Signal, welches von der Vorrichtung zur Frequenzanalyse geliefert wird, in eine komplexe

Signalform transformiert und in der Vorstufe nach einem komplexen LMS-Fehlerminimierungsverfahren mit dem Referenzsignal verknüpft. Nähere Einzelheiten und weitere Ausgestaltungen der Verarbeitung des von der Vorrichtung zur Frequenzanalyse gelieferten Signals ergeben sich aus der DE 199 28 015 Al. Auch andere, bekannte Regelungsverfahren, insbesondere auf Basis eines LMS-Fehlerminimierungsverfahrens sind möglich.

Weiterhin ist es möglich, die Regeleinheit bzw. den Regler **12** derart auszuführen, dass der oder die Aktuatoren, insbesondere Piezoaktuatoren **3** so angesteuert werden, dass diese bei Schwingungen in einem ersten Frequenzbereich starr ausgebildet sind und in einem zweiten, höheren Frequenzbereich aktiviert sind.

Vorzugsweise schließen die beiden Frequenzbereiche aneinander an, wobei die Grenzfrequenz zwischen den beiden Frequenzbereichen zwischen 50 Hz und 200 Hz, insbesondere im Bereich von 70 Hz liegt.

Der zweite Frequenzbereich liegt beispielsweise im Bereich zwischen 50 Hz und 500 Hz, vorzugsweise im Bereich zwischen 70 Hz und 300 Hz.

Statt der Piezoaktuatoren **3** sind auch andere Arten von Aktuatoren möglich.

Der Primärdämpfer **4** kann sowohl ein hydraulischer Dämpfer, als auch eine andere Art von Dämpfer sein.

Schwingungssensor **1** und Fehlersensor **2** bzw ihre Einbauorte können identisch sein.

## Patentansprüche

1. Verfahren zur Verminderung der Schallübertragung in Fahrzeugen mit einem Wagenkasten (8) sowie einem Fahrwerk mit einer Primärebene (13) und einer Sekundärebene (14), bei dem
- mindestens ein Schwingungssensor (1) die störenden durch die Räder erzeugten und/oder übertragenen Schwingungen erfasst,
- mindestens ein Fehlersensor (2) die Restschwingungen bzw. Restkräfte, die auf die Sekundärebene (14) bzw. den Wagenkasten (8) übertragen werden, misst,
- eine Regeleinheit in Abhängigkeit von den durch den mindestens einen Schwingungssensor (1) erfassten SchwingungenAnsteuersignale für mindestens einen Aktuator, insbesondere Piezoaktuator (3) unter Berücksichtigung der Signale des mindestens einen Fehlersensors (2) generiert und
- der mindestens eine Aktuator, insbesondere Piezoaktuator (3), gesteuert durch die Ansteuersignale die Restschwingungen bzw. Restkräfte, die auf die Sekundärebene (14) bzw. den Wagenkasten (8) übertragen werden, minimiert,
**dadurch gekennzeichnet, dass**
- eine Vorrichtung zur Frequenzanalyse der Signale des mindestens einen Schwingungssensors (1) die Frequenzen der stärksten harmonischen Anregungen ermittelt und
- die Regeleinheit die Ansteuersignale für den mindestens einen Aktuator (3) bei den durch die Vorrichtung zur Frequenzanalyse des Schwingungssensorsignals ermittelten Störfrequenzen und/oder im Bereich dieser Störfrequenzen generiert.

2. Verfahren nach Anspruch 1, **dadurch gekennzeichnet, dass** mindestens ein Schwingungssensor (1) im Bereich des oder am Achslager (6) und/oder mindestens ein Schwingungssensor (1) im Bereich unterhalb der Primärfeder (10) und/oder mindestens ein Schwingungssensor (1) im Bereich zwischen einem anderen Federelement und dem Achslager (6) die störenden durch die Räder erzeugten und/oder übertragenen Schwingungen erfasst.

3. Verfahren nach Anspruch 1 oder 2, **dadurch gekennzeichnet, dass** der mindestens eine Aktuator, insbesondere Piezoaktuator (3), der an einzelnen, mehreren oder allen Körperschallübertragungspfaden der Primärebene (13) angebrachtist, die Restschwingungen bzw. Restkräfte, die auf die Sekundärebene (14) bzw. den Wagenkasten übertragen werden, minimiert.

4. Verfahren nach einem der Ansprüche 1 bis 3, **dadurch gekennzeichnet, dass** der mindestens eine Aktuator, insbesondere Piezoaktuator (3), mindestens teilweise oder vollständig
- senkrecht zur Gleisebene und/oder
- parallel zur Gleisebene, parallel zur Fahrtrichtung und/oder
- parallel zur Gleisebene, senkrecht zur Fahrtrichtung
wirkt.

5. Verfahren nach einem der Ansprüche 1 bis 4, **dadurch gekennzeichnet, dass** mindestens ein Fehlersensor (2) die Restschwingungen bzw. Restkräfte, die auf die Sekundärebene (14) bzw. den Wagenkasten übertragen werden, am Fahrwerksrahmen, beispielsweise am Drehgestellrahmen (7), insbesondere im Bereich des Achslagers (6), vorzugsweise oberhalb des Achslagers (6), und/oder im Bereich der Sekundärfeder (11), vorzugsweise oberhalb und/oder unterhalb der Sekundärfeder (11), misst.

6. Verfahren nach einem der Ansprüche 1 bis 5, **dadurch gekennzeichnet, dass** das Signal, weiches von der Vorrichtung zur Frequenzanalyse geliefert wird, einer in der Regeleinheit enthaltenen Filteranordnung mit einer Vorstufe und einer Hauptstufe zugeführt und dort nach einem LMS-(least-mean-square)-Fehlerminimierungsverfahren in der Vorstufe mit einem Referenzsignal verknüpft wird, wobei das Ausgangssignal der Vorstufe als Eingangssignal der Hauptstufe dient und das Signal, welches von der Vorrichtung zur Frequenzanalyse geliefert wird, in eine komplexe Signalform transformiert und in der Vorstufe nach einem komplexen LMS-Fehlerminimierungsverfahren mit dem Referenzsignal verknüpft wird.

7. Verfahren nach einem der Ansprüche 1 bis 6, **dadurch gekennzeichnet, dass** der mindestens eine Aktuator, insbesondere Piezoaktuator (3), so angesteuert wird, dass er bei Schwingungen in einem ersten Frequenzbereich starr ausgebildet ist und in einem zweiten, höheren Frequenzbereich aktiviert ist.

8. Verfahren nach Anspruch 7, **dadurch gekennzeichnet, dass** die beiden Frequenzbereiche aneinander anschließen, wobei die Grenzfrequenz zwischen den beiden Frequenzbereichen zwischen 50 Hz und 200 Hz, insbesondere im Bereich von 70 Hz, liegt.

9. Verfahren nach Anspruch 7 oder 8, **dadurch gekennzeichnet, dass** der zweite Frequenzbereich im Bereich zwischen 50 Hz und 500 Hz, vorzugsweise im Bereich zwischen 70 Hz und 300 Hz, liegt.

10. Fahrwerk für Fahrzeuge mit einem auf dem Fahrwerk abgestützten Wagenkasten (8), insbesondere zur Durchführung des Verfahrens nach einem der Ansprüche 1 bis 9, welches beinhaltet
- eine Primärebene (13), eine Sekundärebene (14), mindestens einen Schwingungssensor (1), mindestens einen Fehlersensor (2), eine Regeleinheit und mindestens einen Aktuator, insbesondere Piezoaktuator (3), wobei
- der mindestens eine Schwingungssensor (1) die störenden durch die Räder erzeugten und/oder übertragenen Schwingungen erfasst,
- der mindestens einen Fehlersensor (2) Restschwingungen bzw. Restkräfte, die auf die Sekundärebene (14) bzw. den Wagenkasten (8) übertragen werden, misst,
- die Regeleinheit in Abhängigkeit von den durch den mindestens einen Schwingungssensor (1) erfassten Schwingungen Ansteuersignale für den mindestens einen Aktuator, insbesondere Piezoaktuator (3), unter Berücksichtigung der Signale des mindestens einen Fehlersensors (2) generiert und
- der mindestens eine Aktuator, insbesondere Piezoaktuator (3), gesteuert durch die Ansteuersignale Restschwingungen bzw. Restkräfte, die auf die Sekundärebene (14) bzw. den Wagenkasten übertragen werden, minimiert,
**dadurch gekennzeichnet, dass**
- eine Vorrichtung zur Frequenzanalyse der Signale des mindestens einen Schwingungssensors (1) vorgesehen ist, die mit dem mindestens einen Schwingungssensor (1) und der Regeleinheit verbunden ist und die Frequenzen der stärksten harmonischen Anregungen ermittelt, und
- die Regeleinheit die Ansteuersignale für den mindestens einen Aktuator (3) bei den durch die Vorrichtung zur Frequenzanalyse des Schwingungssensorsignals ermittelten Störfrequenzen und/oder im Bereich dieser Störfrequenzen generiert.

11. Fahrwerk nach Anspruch 10, **dadurch gekennzeichnet, dass** die Ausgangssignale des mindestens einen Schwingungssensors (1) als Führungsgröße, der mindestens eine Fehlersensor (2) als Messfühler, der mindestens eine Aktuator, insbesondere Piezoaktuator (3), als Stellglied sowie die Vorrichtung zur Frequenzanalyse und die Regeleinheit als Regler (12) einen oder mehrere, voneinander abhängige oder unabhängige technische Regelkreise bilden, wobei die Regelstrecke oder Regelstrecken des oder der Regelkreise aus dem mindestens einen Fehlersensor (2) und dem mindestens einen Aktuator, insbesondere Piezoaktuator (3), gebildet werden.

12. Fahrwerk nach einem der Ansprüche 10 oder 11, **dadurch gekennzeichnet, dass** die Primärebene (13) die Radsatzführungselemente (5), insbesondere einen Radsatzlenker, den mindestens einen Aktuator, insbesondere Piezoaktuator (3), mindestens einen Dämpfer, insbesondere den Primärdämpfer(4), und mindestens ein Federelement, insbesondere die Primärfeder (10), umfasst.

13. Fahrwerk nach einem der Ansprüche 10 bis 12, **dadurch gekennzeichnet, dass** die Sekundärebene (14) eine Sekundärfeder (11) beinhaltet.

14. Fahrwerk nach einem der Ansprüche 10 bis 13, **dadurch gekennzeichnet, dass** der mindestens eine Schwingungssensor (1) so, insbesondere im Bereich und/oder am Achslager (6) und/oder im Bereich mindestens eines der Federelemente, vorzugsweise im Bereich unterhalb der Primärfeder (10), angeordnet ist, dass er die störenden durch die Räder erzeugten und/oder übertragenen Schwingungen erfasst.

15. Fahrwerk nach einem der Ansprüche 10 bis 14, **dadurch gekennzeichnet, dass** der mindestens eine Fehlersensor (2) so, insbesondere am Fahrwerksrahmen, beispielsweise am Drehgestellrahmen (7), insbesondere im Bereich des Achslagers (6), vorzugsweise oberhalb des Achslagers (6), und/oder im Bereich der Sekundärfeder (11), vorzugsweise oberhalb und/oder unterhalb der Sekundärfeder (11), angeordnet ist, dass er die Restschwingungen bzw. Restkräfte, die auf die Sekundärebene (14) bzw. den Wagenkasten übertragen werden, misst.

16. Fahrwerk nach einem der Ansprüche 10 bis 15, **dadurch gekennzeichnet, dass** mindestens ein Schwingungssensor (1) und mindestens ein Fehlersensor (2) oder ihre Einbauorte identisch sind.

17. Fahrwerk nach einem der Ansprüche 10 bis 16, **dadurch gekennzeichnet, dass** der mindestens eine Aktuator, insbesondere Piezoaktuator (3), an einzelnen, mehreren oder allen Körperschallübertragungspfaden der Primärebene (13) angeordnet ist, insbesondere dass der mindestens eine Aktuator, insbesondere Piezoaktuator (3) in der Primärebene (13) an einem, mehreren oder allen Elementen, die den Radsatz (9) in x- und/oder y-Richtung, das heißt in Richtung des Gleises und/oder quer dazu, führen, vorzugsweise an Elementen der Radsatzführung (5) und/oder am Primärdämpfer (4), angeordnet ist.

18. Fahrwerk nach einem der Ansprüche 10 bis 17, **dadurch gekennzeichnet, dass** der mindestens eine Aktuator, insbesondere Piezoaktuator (3), so angeordnet ist, dass seine Wirkrichtung mindestens teilweise oder vollständig
- senkrecht zur Gleisebene und/oder
- parallel zur Gleisebene, parallel zur Fahrtrichtung und/oder
- parallel zur Gleisebene, senkrecht zur Fahrtrichtung verläuft.

19. Fahrwerk nach einem der Ansprüche 10 bis 18, **dadurch gekennzeichnet, dass** der mindestens eine Aktuator, insbesondere Piezoaktuator (3), so angeordnet sind, dass er sich
- in Serie zu Koppelelementen, insbesondere zu einem, mehreren oder allen Dämpfern, vorzugsweise zum Primärdämpfer (4), befinden, die im Arbeitsfrequenzbereich des Aktuator eine mechanisch steife Verbindung darstellen, und
- parallel zu Koppelelementen, insbesondere zu einem, mehreren oder allen Federelementen, vorzugsweise zur Primärfeder (10), befinden, die im Arbeitsfrequenzbereich mechanisch möglichst weich sind.

20. Fahrwerk nach einem der Ansprüche 10 bis 19, **dadurch gekennzeichnet, dass** die Koppelelemente, insbesondere einer, mehrere oder alle Dämpfer, vorzugsweise der Primärdämpfer (4), die sich in Serie mit dem mindestens einen Aktuator, insbesondere Piezoaktuator (3), befinden, so ausgewählt oder ausgelegt sind, dass eine statische Belastung bzw. eine Belastung bei Frequenzen außerhalb des Arbeitsbereichs ausgeschlossen ist.

21. Fahrwerk nach einem der Ansprüche 10 bis 20, **dadurch gekennzeichnet, dass** die Konstruktion des Fahrwerks, insbesondere Drehgestells, so ausgelegt ist, dass die Koppelpunkte des mindestens einen Aktuators, insbesondere Piezoaktuators (3), im Arbeitsfrequenzbereich steif und außerhalb dieses Arbeitsbereiches weich sind.

22. Fahrwerk nach einem der Ansprüche 10 bis 21, **dadurch gekennzeichnet, dass** die Koppelelemente, die wesentlich zur Übertragung des Körperschalles beitragen, nach ihren mechanischen Eigenschaften ausgewählt sind, insbesondere dass in der Primärebene (13) die Koppelelemente die Fahrzeugkomponenten mit einer vergleichsweise hohen dynamischen Steifigkeit verbinden, beispielsweise Achslager (6), Drehgestellrahmen (7), und/oder Wagenkasten (8) oder zumindest Teile davon.

23. Fahrwerk nach einem der Ansprüche 10 bis 22, **dadurch gekennzeichnet, dass** der mindestens eine Aktuator, insbesondere Piezoaktuator (3), mit einer großen, dynamischen Steifigkeit in die Struktur bzw. das Federungssystem integriert ist.

24. Fahrwerk nach einem der Ansprüche 10 bis 23, **dadurch gekennzeichnet, dass** der mindestens eine Aktuator, insbesondere Piezoaktuator (3), und ein Dämpfer, insbesondere Primärdämpfer (10), zu einer Einheit integriert sind.

25. Fahrwerk nach einem der Ansprüche 10 bis 24, **dadurch gekennzeichnet, dass** der mindestens eine Aktuator, insbesondere Piezoaktuator (3), im Dämpferöl eines hydraulischen Dämpfers, insbesondere Primärdämpfers (10), angeordnet ist.

26. Fahrwerk nach einem der Ansprüche 10 bis 25, **dadurch gekennzeichnet, dass** der mindestens eine Aktuator, insbesondere Piezoaktuator (3) so in das hydraulische System eines hydraulischen Dämpfers, insbesondere Primärdämpfers (10), eingebaut ist, dass eine statische Kraftentkopplung durch den Verzicht auf strukturmechanische Kopplung nur über die Dämpfungsflüssigkeit erreicht ist.

27. Fahrwerk nach einem der Ansprüche 10 bis 26, **dadurch gekennzeichnet, dass** ein Teil des mindestens einen Aktuators, insbesondere Piezoaktuators (3), als Kraftsensor, insbesondere als Schwingungssensor (1) und/oder als Fehlersensor (2), verwendet wird.

28. Fahrwerk nach einem der Ansprüche 10 bis 27, **dadurch gekennzeichnet, dass** das Fahrzeug ein Schienenfahrzeug, insbesondere für den Personenverkehr, vorzugsweise für den schnellen Fernverkehr ist.

29. Fahrwerk nach einem der Ansprüche 10 bis 28, **dadurch gekennzeichnet, dass** das Fahrwerk ein Drehgestell ist.

## Claims

1. Method for a reduction of sound propagation in vehicles with a vehicle body (8) and chassis with a primary plane (13) and a secondary plane (14), wherein
- at least one vibration sensor (1) detects the interference vibrations created and/or transferred by the wheels,
- at least one error sensor (2) measures the residual vibrations and residual forces respectively which are transferred onto the secondary plane (14) and the vehicle body (8) respectively,
- a regulating unit generates actuation signals depending on the vibrations detected by the at least one vibration sensor (1), for at least one actuator, in particular a piezo-actuator (3), and taking account of the signals from the at least one error sensor (2), and
- the at least one actuator, in particular a piezo-actuator (3), controlled by the actuation signals, minimises the residual vibrations and residual forces respectively which are transferred onto the secondary plane (14) and the vehicle body (8) respectively,
**characterised in that**
- a device for the frequency analysis of the signals from the at least one vibration sensor (1) determines the frequencies of the most powerful harmonic excitations and
- the regulating unit generates the actuation signals for the at least one actuator (3) at the interference frequencies determined by the device for the frequency analysis of the vibration sensor signal and/or in the range of these interference frequencies.

2. Method according to Claim 1, **characterised in that** at least one vibration sensor (1) in the area of or on the axle bearing (6) and/or at least one vibration sensor (1) in the area beneath the primary springs (10) and/or at least one vibration sensor (1) in the area between another spring element and the axle bearing (6) determines the interference vibrations produced and/or transferred by the wheels.

3. Method according to Claim 1 or 2, **characterised in that** the at least one actuator, in particular a piezo-actuator (3), which is located at individual, several, or all the body sound transfer paths of the primary plane (13), minimises the residual vibrations and residual forces respectively which are transferred onto the secondary plane (14) or the vehicle body respectively.

4. Method according to any one of Claims 1 to 3, **characterised in that** the at least one actuator, in particular piezo-actuator (3), takes effect at least partially or entirely
- perpendicular to the plane of the track and/or
- parallel to the plane of the track, parallel to the direction of travel, and/or
- parallel to the plane of the track, perpendicular to the direction of travel.

5. Method according to any one of Claims 1 to 4, **characterised in that** at least one error sensor (2) measures the residual vibrations and residual forces respectively which are transferred onto the secondary plane (14) or the vehicle body respectively, at the vehicle frame, for example at the bogie frame (7), in particular in the area of the axle bearing (6), preferably above the axle bearing (6), and/or in the area of the secondary springs (11), preferably above and/or below the secondary springs (11).

6. Method according to any one of Claims 1 to 5, **characterised in that** the signal which is delivered by the device for frequency analysis is conducted to a filter arrangement contained in the regulating unit, with a preliminary stage and a main stage, and there linked in accordance with an LMS (least mean square) error minimalisation process in the preliminary stage to a reference signal, wherein the output signal from the preliminary stage serves as the input signal of the main stage and the signal which is delivered by the device for frequency analysis is transformed into a complex signal form and in the preliminary stage is linked to the reference signal in accordance with a complex LMS (least mean square) error minimalisation process.

7. Method according to any one of Claims 1 to 6, **characterised in that** the at least one actuator, in particular a piezo-actuator (3), is actuated in such a way that it is designed to be rigid under vibrations in a first frequency range and is activated in a second, higher frequency range.

8. Method according to Claim 7, **characterised in that** the two frequency ranges connect to one another, wherein the limit frequency lies between the two frequency ranges between 50 Hz and 200 Hz, in particular in the range of 70 Hz.

9. Method according to Claim 7 or 8, **characterised in that** the second frequency range lies in the range between 50 Hz and 500 Hz, preferably in the range between 70 Hz and 300 Hz.

10. Chassis for vehicles with a vehicle body (8) supported on the chassis, in particular for carrying out the method according to any one of Claims 1 to 9, which comprises
- a primary plane (13), a secondary plane (14), at least one vibration sensor (1), at least one error sensor (2), a regulating unit, and at least one actuator, in particular a piezo-actuator (3), wherein
- the at least one vibration sensor (1) detects the interference vibrations created and/or transferred by the wheels,
- the at least one error sensor measures the residual vibrations and residual forces respectively which are transferred onto the secondary plane (14) and the vehicle body (8) respectively,
- the regulating unit generates actuation signals depending on the vibrations detected by the at least one vibration sensor (1), for the at least one actuator, in particular a piezo-actuator (3), and taking account of the signals from the at least one error sensor (2), and
- the at least one actuator, in particular a piezo-actuator (3), controlled by the actuation signals, minimises the residual vibrations and residual forces respectively which are transferred onto the secondary plane (14) and the vehicle body respectively,
**characterised in that**
- a device is provided for the frequency analysis of the signals from the at least one vibration sensor (1), which is connected to the at least one vibration sensor (1) and the regulating unit, and determines the frequencies of the most powerful harmonic excitations, and
- the regulating unit generates the actuation signals for the at least one actuator (3) at the interference frequencies determined by the device for the frequency analysis of the vibration sensor signal and/or in the range of these interference frequencies.

11. Chassis according to Claim 10, **characterised in that** the output signals from the at least one vibration sensor (1) as guide values, the at least one error sensor (2) as a measurement sensor, the at least one actuator, in particular a piezo-actuator (3) as a controlling element and the device for frequency analysis and the regulating unit as a regulator (12), form one or more mutually dependent or independent technical control circuits, wherein the controlled system or systems of the control circuit or circuits are formed from the at least one error sensor (2) and the at least one actuator, in particular a piezo actuator (3).

12. Chassis according to Claim 10 or 11, **characterised in that** the primary plane (13) comprises the wheel set guide elements (5), in particular an axle guide, the at least one actuator, in particular a piezo-actuator (3), at least one damper, in particularly the primary damper (4) and at least one spring element, in particular the primary spring (10).

13. Chassis according to any one of Claims 10 to 12, **characterised in that** the secondary plane (14) comprises a secondary spring (11).

14. Chassis according to any one of Claims 10 to 13, **characterised in that** the at least one vibration sensor (1) is arranged in such a way, in particular in the area of and/or on the axle bearing (6) and/or in the area of at least one of the spring elements, preferably in the area beneath the primary spring (10), that it detects the interfering vibrations created and/or transferred by the wheels.

15. Chassis according to any one of Claims 10 to 14, **characterised in that** the at least one error sensor (2) is arranged in such a way, in particular at the chassis frame, for example at the bogie frame (7), in particular in the area of the axle bearing (6), preferably above the axle bearing (6), and/or in the area of the secondary spring (11), preferably above and/or below the secondary spring (11), that it measures the residual vibrations and residual forces respectively which are transferred onto the secondary plane (14) and the vehicle body respectively.

16. Chassis according to any one of Claims 10 to 15, **characterised in that** at least one vibration sensor (1) and at least one error sensor (2) or their installation locations are identical.

17. Chassis according to any one of Claims 10 to 16, **characterised in that** the at least one actuator, in particular a piezo-actuator (3), is arranged at individual, several or all body-borne noise transfer paths of the primary plane (13), in particular **in that** the at least one actuator, in particular a piezo-actuator (3), is arranged in the primary plane (13) at one, several or all the elements which guide the wheel set (9) in the x-direction and/or y-direction, i.e. in the direction of the track and/or transverse to it, preferably at elements of the axle guide (5) and/or at the primary damper (4).

18. Chassis according to any one of Claims 10 to 17, **characterised in that** the at least one actuator, in particular a piezo-actuator (3), is arranged in such a way that its direction of effect runs at least partially or entirely
- perpendicular to the plane of the track and/or
- parallel to the plane of the track, parallel to the direction of travel, and/or
- parallel to the plane of the track, perpendicular to the direction of travel.

19. Chassis according to any one of Claims 10 to 18, **characterised in that** the at least one actuator, in particular a piezo-actuator (3), is arranged in such a way that it is located
- in series to the coupling elements, in particular to one, several or all the dampers, preferably to the primary damper (4), which in the operating frequency range of the actuator represent a mechanically rigid connection, and
- parallel to coupling elements, in particular to one, several or all the spring elements, preferably to the primary spring (10), which in the operating frequency range are mechanically as soft as possible.

20. Chassis according to any one of Claims 10 to 19, **characterised in that** the coupling elements, in particular one, several or all dampers, preferably the primary damper (4), which are located in series with the at least one actuator, in particular a piezo-actuator (3), are selected or designed in such a way that a static loading or a loading at frequencies outside the operating range is excluded.

21. Chassis according to any one of Claims 10 to 20, **characterised in that** the structure of the chassis, in particular the bogie, is designed in such a way that the coupling points of the at least one actuator, in particular a piezo-actuator (3), are rigid in the operating frequency range and soft outside this range.

22. Chassis according to any one of Claims 10 to 21, **characterised in that** the coupling elements, which make a substantial contribution to the transfer of body sound, are selected in accordance with their mechanical properties, in particular **in that** in the primary plane (13) the coupling elements connect the vehicle components with a comparatively high dynamic rigidity, such as axle bearings (6), bogie frames (7) and/or vehicle bodies (8) or at least parts thereof.

23. Chassis according to any one of Claims 10 to 22, **characterised in that** the at least one actuator, in particular a piezo-actuator (3), is integrated with a high degree of dynamic rigidity into the structure and the suspension system respectively.

24. Chassis according to any one of Claims 10 to 23, **characterised in that** the at least one actuator, in particular a piezo-actuator (3), and a damper, in particular a primary damper (10), are integrated into one unit.

25. Chassis according to any one of Claims 10 to 24, **characterised in that** the at least one actuator, in particular a piezo-actuator (3), is arranged in the damper oil of a hydraulic damper, in particular a primary damper (10).

26. Chassis according to any one of Claims 10 to 25, **characterised in that** the at least one actuator, in particular a piezo-actuator (3), is integrated into the hydraulic system of a hydraulic damper, in particular a primary damper (10), in such a way that a static force detachment by doing away with a mechanical structure coupling is only achieved via the damping fluid.

27. Chassis according to any one of Claims 10 to 26, **characterised in that** a part of the at least one actuator, in particular a piezo-actuator (3), is used as a force sensor, in particular as a vibration sensor (1) and/or as an error sensor (2).

28. Chassis according to any one of Claims 10 to 27, **characterised in that** the vehicle is a rail vehicle, in particular for passenger transport, and preferably for long-distance high-speed travel.

29. Chassis according to any one of Claims 10 to 28, **characterised in that** the chassis is a bogie.

## Revendications

1. Un procédé pour la réduction de la transmission de son dans des véhicules ayant une caisse de wagon (8), ainsi qu'un châssis avec un plan primaire (13) et un plan secondaire (14), dans lequel
- au moins un capteur de vibrations (1) détecte les vibrations gênantes générées et/ou transmises par les roues,
- au moins un capteur d'erreurs (2) mesure les vibrations résiduelles ou forces résiduelles qui sont transmises au plan secondaire (14) ou à la caisse de wagon (8),
- une unité de régulation génère des signaux de commande en fonction des vibrations détectées par au moins un capteur de vibrations (1) pour au moins un actionneur, en particulier un actionneur piézoélectrique (3), étant tenus en compte les signaux de au moins un capteur d'erreurs (2) et
- au moins un actionneur, en particulier un actionneur piézoélectrique (3), contrôlé par les signaux de commande, minimise les vibrations résiduelles ou forces résiduelles qui sont transmises au plan secondaire (14) ou à la caisse de wagon (8),
**caractérisé en ce que**
- un dispositif pour l'analyse de fréquences des signaux de au moins un capteur de vibrations (1) détermine les fréquences des excitations harmoniques les plus fortes et
- l'unité de régulation génère les signaux de commande pour au moins un actionneur (3) aux fréquences perturbatrices déterminées par le dispositif pour l'analyse de fréquences du signal du capteur de vibrations et/ou dans l'intervalle de ces fréquences perturbatrices.

2. Un procédé selon la revendication 1, **caractérisé en ce que** au moins un capteur de vibrations (1) dans la zone de la boîte d'essieu (6) ou dans celle-ci et/ou au moins un capteur de vibrations (1) dans la zone en dessous de la suspension primaire (10) et/ou au moins un capteur de vibrations (1) dans la zone entre un autre élément de suspension et la boîte d'essieu (6) détecte les vibrations gênantes générées et/ou transmises par les roues.

3. Un procédé selon la revendication 1 ou 2, **caractérisé en ce que** au moins un actionneur, en particulier un actionneur piézoélectrique (3), qui est fixé sur différentes, plusieurs ou toutes les voies de transmission de son propagé par des structures solides du plan primaire (13), minimise les vibrations résiduelles ou forces résiduelles qui sont transmises au plan secondaire (14) ou à la caisse de wagon.

4. Un procédé selon l'une des revendications 1 à 3, **caractérisé en ce que** au moins un actionneur, en particulier un actionneur piézoélectrique (3), agit partiellement ou totalement
- dans le sens perpendiculaire par rapport au plan de la voie et/ou
- parallèlement au plan de la voie, parallèlement au sens de la marche et/ou
- parallèlement au plan de la voie, dans le sens perpendiculaire par rapport au sens de la marche.

5. Un procédé selon l'une des revendications 1 à 4, **caractérisé en ce que** au moins un capteur d'erreurs (2) mesure les vibrations résiduelles ou forces résiduelles qui sont transmises au plan secondaire (14) ou à la caisse de wagon dans le châssis, par exemple dans le châssis de bogie (7), en particulier dans la zone de la boîte d'essieu (6), de préférence au-dessus de la boîte d'essieu (6) et/ou dans la zone de suspension secondaire (11), de préférence au-dessus et/ou en dessous de la suspension secondaire (11).

6. Un procédé selon l'une des revendications 1 à 5, **caractérisé en ce que** le signal fourni par le dispositif pour l'analyse de fréquences s'alimente à une disposition de filtres ayant une étape préalable et une étape principale contenue dans l'unité de régulation et y est lié selon un procédé de minimisation d'erreurs LMS (least-mean-square) dans l'étape préalable à un signal de référence, le signal de sortie de l'étape préalable servant de signal d'entrée de l'étape principale et le signal fourni par le dispositif pour l'analyse de fréquences étant transformé en une forme de signal complexe et étant lié dans l'étape préalable selon un procédé complexe de minimisation d'erreurs LMS au signal de référence.

7. Un procédé selon l'une des revendications 1 à 6, **caractérisé en ce que** au moins un actionneur, en particulier un actionneur piézoélectrique (3), est commandé de façon à ce que en cas de vibrations dans un premier intervalle de fréquences il soit rigide et dans un deuxième intervalle de fréquences, plus élevé, il soit activé.

8. Un procédé selon la revendication 7, **caractérisé en ce que** les deux intervalles de fréquences sont disposés à la suite l'un de l'autre, la fréquence limite entre les deux intervalles de fréquences se situant entre 50 Hz et 200 Hz, en se trouvant en particulier dans l'intervalle de 70 Hz.

9. Un procédé selon la revendication 7 ou 8, **caractérisé en ce que** le deuxième intervalle de fréquences se situe dans l'intervalle compris entre 50 Hz et 500 Hz, de préférence dans l'intervalle compris entre 70 Hz et 300 Hz.

10. Un châssis pour véhicules ayant une caisse de wagon (8) appuyée sur le châssis, en particulier pour la réalisation du procédé selon l'une des revendications 1 à 9, qui comprend
- un plan primaire (13), un plan secondaire (14), au moins un capteur de vibrations (1), au moins un capteur d'erreurs (2), une unité de régulation et au moins un actionneur, en particulier un actionneur piézoélectrique (3),
- au moins un capteur de vibrations (1) détectant les vibrations gênantes générées et/ou transmises par les roues,
- au moins un capteur d'erreurs (2) mesurant les vibrations résiduelles ou forces résiduelles qui sont transmises au plan secondaire (14) ou à la caisse de wagon (8),
- l'unité de régulation générant des signaux de commande en fonction des vibrations détectées par au moins un capteur de vibrations (1) pour au moins un actionneur, en particulier un actionneur piézoélectrique (3), étant tenus en compte les signaux de au moins un capteur d'erreurs (2) et
- au moins un actionneur, en particulier un actionneur piézoélectrique (3), contrôlé par les signaux de commande, minimisant les vibrations résiduelles ou forces résiduelles qui sont transmises au plan secondaire (14) ou à la caisse de wagon,
**caractérisé en ce que**
- est prévu un dispositif pour l'analyse de fréquences des signaux de au moins un capteur de vibrations (1), qui est relié à au moins un capteur de vibrations (1) et l'unité de régulation et qui détermine les fréquences des excitations harmoniques les plus fortes et
- l'unité de régulation génère les signaux de commande pour au moins un actionneur (3) aux fréquences perturbatrices déterminées par le dispositif pour l'analyse de fréquences du signal du capteur de vibrations et/ou dans l'intervalle de ces fréquences perturbatrices.

11. Un châssis selon la revendication 10, **caractérisé en ce que** les signaux de sortie de au moins un capteur de vibrations (1) comme magnitude pilote, au moins un capteur d'erreurs (2) comme palpeur de mesure, au moins un actionneur, en particulier un actionneur piézoélectrique (3), comme élément de réglage, ainsi que le dispositif pour l'analyse de fréquences et l'unité de régulation comme régulateur (12) forment un ou plusieurs circuits de régulation techniques qui dépendent ou ne dépendent pas les uns des autres, le système régulé ou les systèmes régulés du ou des circuits de régulation étant formés par au moins un capteur d'erreurs (2) et au moins un actionneur, en particulier un actionneur piézoélectrique (3).

12. Un châssis selon l'une des revendications 10 ou 11, **caractérisé en ce que** le plan primaire (13) comprend les éléments guide de l'essieu (5), en particulier, un guide d'essieu, au moins un actionneur, en particulier un actionneur piézoélectrique (3), au moins un amortisseur, en particulier un amortisseur primaire (4) et au moins un élément de suspension, en particulier la suspension primaire (10).

13. Un châssis selon l'une des revendications 10 à 12, **caractérisé en ce que** le plan secondaire (14) comprend une suspension secondaire (11).

14. Un châssis selon l'une des revendications 10 à 13, **caractérisé en ce que** au moins un capteur de vibrations (1) est disposé de telle façon, en particulier dans la zone de la boîte d'essieu (6) et/ou dans celle-ci et/ou dans la zone de au moins un des éléments de suspension, de préférence dans la zone en dessous de la suspension primaire (10), qu'il détecte les vibrations gênantes générées et/ou transmises par les roues.

15. Un châssis selon l'une des revendications 10 à 14, **caractérisé en ce que** au moins un capteur d'erreurs (2) est disposé de telle façon, en particulier dans le châssis, par exemple dans le châssis du bogie (7), en particulier dans la zone de la boîte d'essieu (6), de préférence au-dessus de la boîte d'essieu (6) et/ou dans la zone de suspension secondaire (11), de préférence au-dessus et/ou en dessous de la suspension secondaire (11), qu'il mesure les vibrations résiduelles ou forces résiduelles qui sont transmises au plan secondaire (14) ou à la caisse de wagon.

16. Un châssis selon l'une des revendications 10 à 15, **caractérisé en ce que** au moins un capteur de vibrations (1) et au moins un capteur d'erreurs (2) ou leurs emplacements de montage sont identiques.

17. Un châssis selon l'un des revendications 10 à 16, **caractérisé en ce que** au moins un actionneur, en particulier un actionneur piézoélectrique (3), est disposé sur différentes, plusieurs ou toutes les voies de transmission de son propagé par des structures solides du plan primaire (13), en particulier **en ce que** au moins un actionneur, en particulier un actionneur piézoélectrique (3), est disposé dans le plan primaire (13) dans l'un, plusieurs ou tous les éléments qui guident l'essieu monté (9) dans la direction x et/ou y, c'est à dire dans le sens de la voie et/ou transversalement à celle-ci, de préférence sur des éléments guide de l'essieu (5) et/ou sur l'amortisseur primaire (4).

18. Un châssis selon l'une des revendications 10 à 17, **caractérisé en ce que** au moins un actionneur, en particulier un actionneur piézoélectrique (3), est disposé de sorte que son sens d'action s'étend partiellement ou totalement
- dans le sens perpendiculaire par rapport au plan de la voie et/ou
- parallèlement au plan de la voie, parallèlement au sens de la marche et/ou
- parallèlement au plan de la voie, dans le sens perpendiculaire par rapport au sens de la marche.

19. Un châssis selon l'une des revendications 10 à 18, **caractérisé en ce que** au moins un actionneur, en particulier un actionneur piézoélectrique (3), est disposé de sorte
- qu'il se trouve monté en série avec des éléments d'accouplement, en particulier un, plusieurs ou tous les amortisseurs, de préférence l'amortisseur primaire (4), qui dans l'intervalle de fréquences de travail de l'actionneur représentent une union mécaniquement rigide, et
- en parallèle à des éléments d'accouplement, en particulier un, plusieurs ou tous les éléments de suspension, de préférence la suspension primaire (10), qui dans l'intervalle de fréquence de travail ont un comportement mécanique le plus doux possible.

20. Un châssis selon l'une des revendications 10 à 19, **caractérisé en ce que** les éléments d'accouplement, en particulier un, plusieurs ou tous les amortisseurs, de préférence l'amortisseur primaire (4), qui se trouve(nt) montés en série avec au moins un actionneur, en particulier un actionneur piézoélectrique (3), ont été choisi(s) ou conçu(s) de sorte qu'est exclue une charge statique ou une charge lorsque que se produisent des fréquences en dehors de l'intervalle de travail.

21. Un châssis selon l'une des revendications 10 à 20, **caractérisé en ce que** la construction du châssis, en particulier du bogie, est conçue de sorte que les points d'accouplement de au moins un actionneur, en particulier un actionneur piézoélectrique (3), sont rigides dans l'intervalle de fréquences de travail et doux en dehors de cet intervalle de travail.

22. Un châssis selon l'une des revendications 10 à 21, **caractérisé en ce que** les éléments d'accouplement qui contribuent substantiellement à la transmission de son propagé par des structures solides sont choisis en fonction de leurs propriétés mécaniques, en particulier **en ce que**, dans le plan primaire (13), les éléments d'accouplement unissent les composants du véhicule avec une rigidité dynamique comparativement élevée, par exemple la boîte d'essieu (6), le châssis du bogie (7) et/ou la caisse du wagon (8) ou au moins des parties de ceux-ci.

23. Un châssis selon l'une des revendications 10 à 22, **caractérisé en ce que** au moins un actionneur, en particulier un actionneur piézoélectrique (3), est intégré avec une rigidité dynamique élevée dans la structure ou dans le système de suspension.

24. Un châssis selon l'une des revendications 10 à 23, **caractérisé en ce que** au moins un actionneur, en particulier un actionneur piézoélectrique (3), et un amortisseur, en particulier un amortisseur primaire (10), sont intégrés dans une unité.

25. Un châssis selon l'une des revendications 10 à 24, **caractérisé en ce que** au moins un actionneur, en particulier un actionneur piézoélectrique (3), est disposé dans de l'huile d'amortisseur d'un amortisseur hydraulique, en particulier de l'amortisseur primaire (10).

26. Un châssis selon l'une des revendications 10 à 25, **caractérisé en ce que** au moins un actionneur, en particulier un actionneur piézoélectrique (3), est monté de telle façon dans le système hydraulique d'un amortisseur hydraulique, en particulier de l'amortisseur primaire (10), que l'on obtient un désaccouplement de forces statiques grâce au renoncement à un accouplement mécanique de structure seulement à travers le liquide d'amortissement.

27. Un châssis selon l'une des revendications 10 à 26, **caractérisé en ce que** une partie de au moins un actionneur, en particulier un actionneur piézoélectrique (3), est utilisée comme capteur de forces, en particulier comme capteur de vibrations (1) et/ou comme capteur d'erreurs (2).

28. Un châssis selon l'une des revendications 10 à 27, **caractérisé en ce que** le véhicule est un véhicule sur rails, en particulier pour le transport de personnes, de préférence pour des transports rapides à distance.

29. Un châssis selon l'une des revendications 10 à 28, **caractérisé en ce que** le châssis est un bogie.
